# EUROPEAN PATENT APPLICATION

(11) **EP 4 732 653 A1**
(43) Date of publication of application: **29.04.2026**
(21) Application number: 25202551.5
(22) Date of filing: 16.09.2025
(51) Int. Cl.: A01C 7/08, A01C 7/12

(54) **METHOD FOR CONTROLLING THE DISTRIBUTION OF COMMODITY IN A PLANTING ASSEMBLY**

(30) Priority: 23.10.2024 US 202418924697
(71) Applicant: Deere & Company, Moline, IL 61265 (US)
(72) Inventor: EKHE, SANDEEP P, 68163 Mannheim (DE); JOSHI, OMKAR P, 68163 Mannheim (DE); KALE, MANDAR M, 68163 Mannheim (DE)
(74) Representative: Reichert, Christian

(57) **Abstract**

A method for controlling the distribution of commodity in a planting assembly (20) comprising: (802) identifying, with a controller (212, 504), a desired passage from at least a first passage (206, 404) and a second passage (208, 406) for a meter assembly (200, 400) to distribute a commodity into; and (804) selectively rotating a roller (218, 408) of the meter assembly, with the controller, in a first direction (416) to distribute commodity into the first passage and selectively rotating the roller of the meter assembly, with the controller, in a second direction (418) to distribute commodity into the second passage; wherein (806) the commodity is directed towards the first passage when the roller is rotated in the first direction and (808) commodity is directed towards the second passage when the roller is rotated in the second direction.

## Description

### FIELD OF THE DISCLOSURE

The present disclosure relates generally to selecting the flow of commodity to one or more primary for further distribution and more specifically to distributing commodity to a specific conduit based a configuration of a meter assembly.

### BACKGROUND

Modern air seeders utilize airflow through conduit to direct commodity such as fertilizer and seed to a desired location. Typically, the commodity is stored in a tank on a cart and selectively provided to conduits to be further transported to a drill assembly or otherwise ultimately placed in the underlying soil. A meter assembly is often positioned between the tank and the conduit to selectively distribute commodity from the tank into the conduit. Often, an outlet of a meter assembly can selectively direct commodity to any one of multiple conduits

Current systems often require the use to go to each tank and change a shoot lever manually to selectively distribute commodity to the preferred conduit. Often, the shoot lever doesn't work smoothly because commodity may be obstructing the shoot lever movement. In this scenario, the user may need to clean the assembly to remove any obstructing commodity so the shoot lever can work properly. In conventional systems, it may look like the shoot lever is locked in the proper location but commodity or the like may be interfering with proper distribution of the commodity into the desired conduit. Accordingly, conventional conduit selection methods may cause unpredictable planting wherein the user is not distributing the intended commodity into the underlying surface.

### SUMMARY

One embodiment is a method for controlling the distribution of commodity in a planting assembly. The method includes identifying, with a controller, a desired passage from at least a first passage and a second passage for a meter assembly to distribute a commodity into and selectively rotating a roller of the meter assembly, with the controller, in a first direction to distribute commodity into the first passage and selectively rotating the roller of the meter assembly, with the controller, in a second direction to distribute commodity into the second passage. The commodity is directed towards the first passage when the roller is rotated in the first direction and commodity is directed towards the second passage when the roller is rotated in the second direction.

One example of this embodiment includes diverting the commodity towards the desired passage with a diverter that is fixed relative to the meter assembly housing and positioned at an outlet of the meter assembly. In part of this example, the diverter comprises at least one brush extending from a tip of the diverter towards the roller.

Yet another example of this embodiment includes diverting the commodity towards the desired passage with a diverter that flexes relative to a meter assembly housing when the roller transitions from rotating in the first direction to rotating in the second direction. Part of this example includes flexing the diverter to a first orientation when the roller rotates in the first direction to direct commodity from the outlet to the first passage and flexing the diverter to a second orientation when the roller rotates in the second direction to direct commodity from the outlet to the second passage.

Yet another example of this embodiment includes diverting the commodity towards the desired passage with a diverter that pivots relative to a meter assembly housing between a first orientation and a second orientation when the roller transitions from rotating in the first direction to rotating in the second direction. Part of this example include transitioning the diverter to the first orientation with the roller when the roller is rotating in the first direction to direct commodity from the outlet to the first passage and maintaining the diverter in the first orientation with a first magnet in the meter assembly housing. Another part of this example includes transitioning the diverter to the second orientation with the roller when the roller is rotating in the second direction to direct commodity from the outlet to the second passage and maintaining the diverter in the second orientation with a second magnet in the meter assembly housing.

Another example of this embodiment includes selectively redirecting fluid flow, with the controller, from a first blower to a first tank configure to contain commodity when the roller is rotated in the first direction and selectively redirecting fluid flow, with the controller, from a second blower to the first tank when the roller is rotated in the second direction. Part of this example includes selectively controlling a diverter valve, with the controller, to divert fluid from the first blower to the first tank. In another part of this example, the diverter valve is fluidly coupleable to a second tank. Another part of this example includes selectively controlling a pressure provided to the first tank with the controller through a pressure control valve.

Yet another example of this embodiment includes selectively redirecting a fluid connection between a blower and a tank, with the controller, when the controller switches from rotating the roller in the first direction to rotating the roller in a second direction.

Another embodiment of this disclosure is a commodity distribution assembly that has a tank configured to contain a commodity and a meter assembly at an outlet of the tank. The meter assembly has a roller configured to selectively distribute commodity from the tank to one or more of at least a first passage and a second passage and a diverter configured to divert commodity to one or more of the first passage and the second passage. The diverter directs commodity flow from the tank to the first passage when the roller rotates in a first direction and the diverter directs commodity flow from the tank to the second passage when the roller rotates in a second direction.

In one example of this embodiment the diverter is substantially fixed relative to a meter housing of the meter assembly. In another example the diverter is deformable and flexes to a first orientation through contact with the roller when the roller rotates in the first direction and flexes to a second orientation through contact with the roller when the roller rotates in the second direction.

In yet another example of this embodiment the diverter pivots to a first orientation through contact with the roller when the roller rotates in the first direction and pivots to a second orientation through contact with the roller when the roller rotates in the second direction. In part of this example a first magnet selectively maintains the diverter in the first orientation and a second magnet selectively maintains the diverter in the second orientation.

Yet another example of this embodiment has a tank passage that is configured to selectively fluidly couple a blower to the tank, wherein a controller fluidly couples the tank to the blower when the roller rotates in the first direction and the controller fluidly uncouples the tank from the blower when the roller rotates in the second direction.

Yet another embodiment of this disclosure is a system for directing commodity from a tank to one or more of a first passage and a second passage with a meter assembly. The system includes a controller configured to selectively control the meter assembly and selectively alter a fluid flow path of a blower. The controller is configured to selectively rotate a roller of the meter assembly in a first direction to direct commodity to the first passage and the controller is configured to selectively rotate the roller of the meter assembly in a second direction to direct commodity to the second passage. The controller is also configured to direct fluid flow to the tank when the roller is rotating in the first direction.

### BRIEF DESCRIPTION OF THE DRAWINGS

The above-mentioned aspects of the present disclosure and the manner of obtaining them will become more apparent and the disclosure itself will be better understood by reference to the following description of the embodiments of the disclosure, taken in conjunction with the accompanying drawings, wherein:
Fig. 1 is a side view of a towed cart and prime mover along with an attached implement;
Fig. 2a is a schematic view of a meter assembly;
Fig. 2b is a schematic view of a multiple meter assembly configuration;
Fig. 2c is a schematic view of another multiple meter assembly configuration;
Fig. 3 is an elevated perspective view of a meter assembly;
Fig. 4a is a schematic view of a fixed diverter in a meter assembly with a roller in a stationary configuration;
Fig. 4b is a schematic view of the fixed diverter in the meter assembly of Fig. 4a illustrating commodity flow when the roller is rotating in a first direction;
Fig. 4c is a schematic view of the fixed diverter in the meter assembly of Fig. 4a illustrating commodity flow when the roller is rotating in a second direction;
Fig. 5 is a schematic view of a meter assembly control system;
Fig. 6a is a schematic view of a flexible diverter in a meter assembly with a roller in a stationary configuration;
Fig. 6b is a schematic view of the flexible diverter in the meter assembly of Fig. 6a illustrating commodity flow when the roller is rotating in a first direction;
Fig. 6c is a schematic view of the flexible diverter in the meter assembly of Fig. 6a illustrating commodity flow when the roller is rotating in a second direction;
Fig. 7a is a schematic view of a pivoting diverter in a meter assembly with a roller in a stationary configuration;
Fig. 7b is a schematic view of the pivoting diverter in the meter assembly of Fig. 7a illustrating commodity flow when the roller is rotating in a first direction;
Fig. 7c is a schematic view of the pivoting diverter in the meter assembly of Fig. 7a illustrating commodity flow when the roller is rotating in a second direction; and
Fig. 8 is a method flow chart for controlling distribution of a commodity.

Corresponding reference numerals are used to indicate corresponding parts throughout the several views.

### DETAILED DESCRIPTION

For the purposes of promoting an understanding of the principles of the present disclosure, reference will now be made to the embodiments described herein and illustrated in the drawings and specific language will be used to describe the same. It will nevertheless be understood that no limitation of the scope of the present disclosure is thereby intended, such alterations and further modifications in the illustrated devices and methods, and such further applications of the principles of the present disclosure as illustrated therein being contemplated as would normally occur to one skilled in the art to which the present disclosure relates.

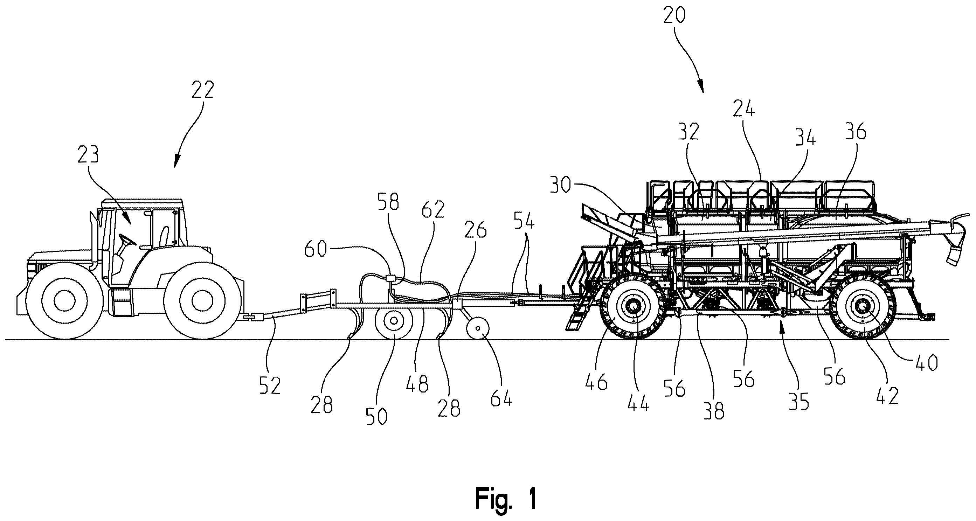

An air or pneumatic seeder 20 is shown in Fig. 1 towed by a tractor or prime mover 22. The seeder 20 includes an air cart 24, also known as a commodity cart, having one or more tanks for one or more commodities to be applied to the soil, and a drill or implement 26 which applies the commodity to the soil. The drill has a plurality of ground engaging tools 28. The cart 24 is shown with four tanks 30, 32, 34, and 36 mounted on a frame 38. The frame 38 is supported on a rear axle 40 having wheels/tires 42 at the rear of the frame 38. Depending on the cart configuration, additional axles may be provided, such as front axle 44 and wheels/tires 46. The axles and wheels support the cart frame 38 for movement over the ground surface towed by tractor 22. Any number of tanks can be provided on the air cart. The term "cart" should be broadly construed to include any device towed by a prime mover that is supported on one or more axles, such as a trailer, wagon, cart, implement, etc.

The drill 26 includes a frame 48 supported by ground wheels 50 and is connected to the rear of the tractor 22 by a tongue 52. As shown, the cart 24 is known as a "tow behind" cart meaning that the cart follows the drill. In alternative arrangements, the cart may be a "tow between" cart meaning that the cart is between the tractor 22 and drill 26. In yet a further possible arrangement, the air cart and drill can be combined onto a common frame. The tanks 30, 32, 34, and 36 can be any suitable device for holding a material or commodity such as seed or fertilizer to be distributed to the soil. The tanks could be hoppers, bins, boxes, containers, etc. The term "tank" shall be broadly construed herein. Furthermore, one tank with multiple compartments can also be provided.

A pneumatic distribution system 35 includes a fan located behind the front tires 46, connected to a product delivery conduit structure having multiple product flow passages 54. The fan directs air through the passages 54. A product meter assembly 56 is located at the bottom of each tank and delivers product from the tanks at a controlled rate to the passages 54 and the air stream moving through the passages 54.

Each passage 54 carries product in the air stream to a secondary distribution tower 58 on the drill 26. Typically, there will be one tower 58 for each passage 54. Each tower 58 includes a secondary distributing manifold 60 located at the top of a vertical tube. The distributing manifold 60 divides the flow of product into a number of secondary distribution lines 62. Each secondary distribution line 62 delivers product to one of a plurality of ground engaging tools 28 which opens a furrow in the soil and deposits the product therein. The number of passages 54 may vary from one to eight or ten or more, depending on the configuration of the cart and drill. Depending on the cart and drill, there may be two distribution manifolds in the air stream between the meters and the ground engaging tools. Alternatively, in some configurations, the product is metered directly from the tank into secondary distribution lines 62 leading to the ground engaging tools 28 without an intermediate distribution manifold.

A firming or closing wheel 64 associated with each tool 28 trails the tool and firms the soil over the product deposited in the soil. Various types of tools 28 may be used including, tines, shanks, disks, etc. The tools 28 are movable between a lowered position engaging the ground and a raised position above the ground. Each tool may be configured to be raised by a separate actuator. Alternatively, multiple tools 28 may be mounted to a common rockshaft for movement together. In yet another alternative, the tools 28 may be fixed to the frame 38 and the frame 38 raised and lowered by linkages on each of the drill wheels 50.

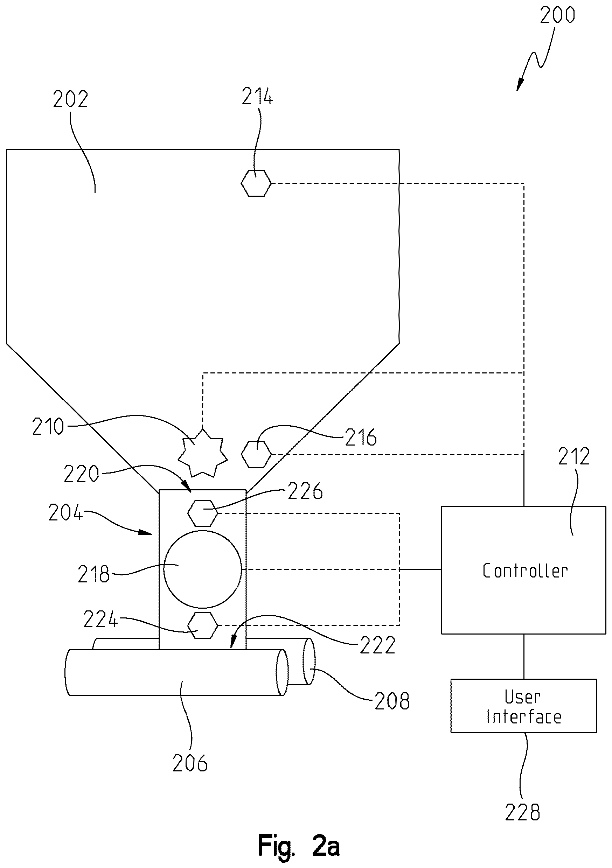

Referring now to the non-exclusive embodiment of Fig. 2a, a schematic view of a meter assembly 200 is illustrated. The meter assembly 200 may have a reservoir or tank 202 coupled to a meter 204. The tank 202 may be any of the tanks 30, 32, 34, and 36 and be sized to contain commodity therein and direct the commodity to the meter 204. Commodity may refer to seed, fertilizer, or other nutrients and the like that promote growing a crop. The meter 204 may be representative of the product meter assembly 56. Further, the meter 204 may selectively distribute commodity from the tank 202 to a first or second passage 206, 208. In one aspect of this disclosure, the meter 204 may have a run selector, flapper, or the like that is selectively repositionable to distribute commodity from the tank 202 into either one of the first passage 206 or the second passage 208 depending on the position of the flapper. Embodiments of a diverter are described in more detail herein.

While two passages 206, 208 are illustrated herein, this disclosure contemplates embodiments with more than two passages coupled to the meter 204. As will be understood in view of this disclosure, the teachings discussed herein are applicable to meters having any number of passages coupled thereto.

In one aspect of this disclosure, the tank 202 may have an agitator 210 positioned in or on the tank 202. The agitator 210 may be a rotary agitator having extensions that extend radially away from a rotation axis. The agitator 210 may interact with the tank 202 to agitate any commodity therein to ensure the commodity is properly fed into the meter 204. While a rotary agitator is discussed herein, this disclosure contemplates any known commodity agitator for the agitator 210. In one aspect of this disclosure, the agitator 210 may be selectively engaged by a controller 212 to agitate any commodity in the tank 202.

In another non-exclusive example, the tank 202 may have a tank load sensor 216 positioned to identify the weight of the tank 202 along with any commodity positioned therein. The sensor 216 may be a load sensor or the like positioned between the tank 202 and the cart frame 38 or portion thereof to identify the weight of the tank 202 and commodity therein. In this configuration, the sensor 216 may communicate readings to the controller 212 that are indicative of the weight of commodity in the tank 202. In one aspect of this disclosure, the weight of the tank 202 may be a value stored in a memory unit of the controller 212 or elsewhere. The weight of the tank 202 may be compared to the readings from the sensor 216 to identify when the tank is empty. For example, when the sensor 216 identifies a reading to the controller 212 that is about equal to the weight of the tank 202, the controller 212 may identify that the tank 202 is substantially empty and does not contain a significant amount of commodity.

In one aspect of this disclosure, the meter 204 may have a roller 218 positioned therein. The roller 218 may selectively distribute commodity from an inlet 220 to an outlet 222. The roller 218 may rotate about an axis and have a plurality of cavities spaced circumferentially there about. Each of the plurality of cavities may have a radially distal opening that allows commodity to enter and exit each of the plurality of cavities as the roller 218 rotates. Accordingly, commodity positioned at the inlet 220 may fall by gravity into one of the cavities of the roller 218 as it rotates thereby. Next, as that roller cavity rotates about the axis towards the outlet 222, the commodity may fall out of the cavity as gravity and radial forces move the commodity towards the outlet 222. Accordingly, the commodity may be distributed in a metered fashion from the inlet 220 to the outlet 222 based on the rotation speed of the roller 218.

In one aspect of this disclosure, the rotational speed of the roller 218 may be dictated by the controller 212. More specifically, the roller 218 may be coupled to a motor or the like. In one non-limiting example the motor is an electrical motor that is controlled by the controller 212 to rotate the roller 218. However, the motor may be a pneumatic or hydraulic motor as well that is controlled through the controller 212 via a corresponding electro-hydraulic or electro-pneumatic system. Accordingly, this disclosure contemplates implementing the teachings discussed herein to control a roller 218 with the controller 212 utilizing an electrical, electro-hydraulic, or electro-pneumatic system.

The controller 212 may also communicate with a user interface 228. The user interface 228 may provide a location for a user to input data or commands to the controller 212 as well as allow the controller 212 to provide an indicator to the user. In one non-exclusive example of this disclosure, the user interface 228 may be a touch screen device. The touch screen device may have a plurality of user-selectable inputs displayed thereon that allow the user to communicate an input preference to the controller 212. In another embodiment, the user interface 228 may be buttons and switches among other things positioned on a dash and selectable by a user. In yet another embodiment, the user interface 228 may rely on visual or auditory input from the user to indicate user preference.

Similarly, the user interface 228 may provide an indicator and selection options to the user regarding actions and observations of the controller 212. More specifically, the user interface 228 may be a display that shows icons representing the conditions of the seeder 20 identified by the controller 212 via communication with the sensors, agitator 210, and roller 218. In one non-limiting example, the user interface 228 may show an icon when the roller 218 is being powered indicating the direction the roller 218 is spinning. Further, the user interface 228 may show an icon when the agitator 210 is engaged. The indication presented by the user interface 228 may also be a light that is illuminated, an auditory signal played to the user, haptic feedback that is felt by the user, or any other type of indication that may be observable by a user. Further, in one non-exclusive example the user interface 228 is a remote device such as a tablet, computer, or smartphone.

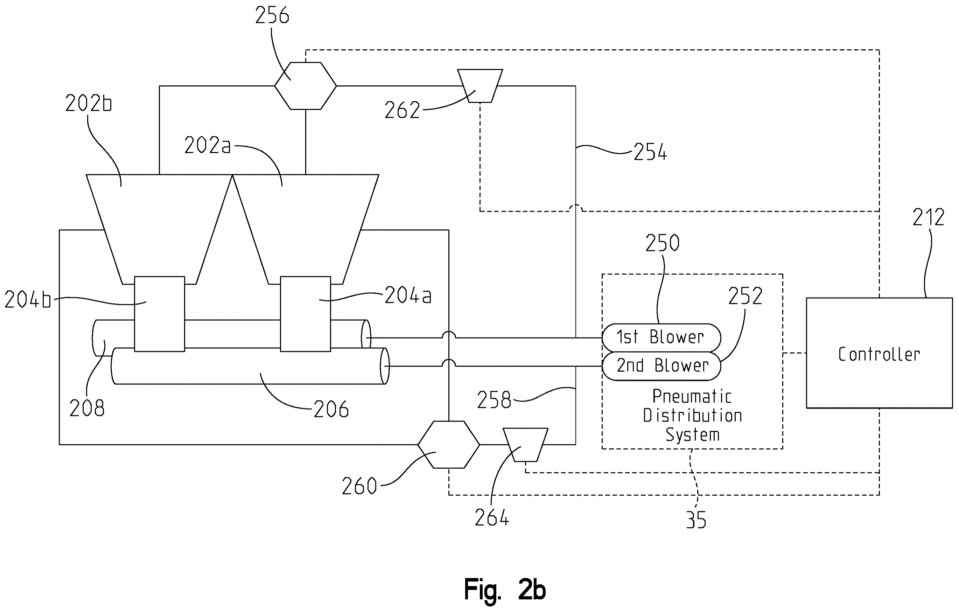

Referring now to Fig. 2b, one example of this disclosure having multiple tanks and meter assemblies is illustrated herein. Each tank and meter assembly may function substantially similarly to that described with reference to Fig. 2a. More specifically, a first tank 202a may contain commodity therein to be selectively distributed through a first meter 204a to one of the passages 206, 208 through one or more of the diverting techniques discussed herein. Similarly, a second tank 202b may contain commodity therein to be selectively distributed through a second meter 204b to one of the passages 206, 208 through one or more of the diverting techniques discussed herein. The controller 212 may control the meters 204a, 204b to selectively distribute commodity from the corresponding tank 202a, 202b to the desired passage 206, 208 utilizing one or more of the diverting techniques discussed herein. In one example, the controller 212 may utilize the first meter 204a to direct commodity from the first tank 202a to passage 206 while the controller 212 may utilize the second meter 204b to direct commodity from the second tank 202b to passage 208. Alternatively, the controller 212 may utilize the first meter 204a to direct commodity from the first tank 202a to passage 208 while the controller 212 may utilize the second meter 204b to direct commodity from the second tank 202b to passage 206. Further still, the controller 212 can selectively engage the first and second meter 204a, 204b to direct commodity from the corresponding tank 202a, 202b to the same passage 206 or 208.

In another aspect of this disclosure, the controller 212 may communicate with the pneumatic distribution system 35 to selectively provide fluid flow to the corresponding tank 202a, 202b providing commodity to the corresponding passage 206, 208. For example, the pneumatic distribution system 35 may have a first blower 250 configured to provide fluid flow to passage 208 and a second blower 252 configured to provide fluid flow to passage 206. The first and second blowers 250, 252 may be blowers known in the art to provide air-flow to the corresponding passages 206, 208 that is sufficient to move commodity therethrough. The tanks 202a, 202b may be selectively sealed such that the tanks 202a, 202b may be pressurized to direct flow through the corresponding meter 204a, 204b and into the corresponding passage 206, 208. In this configuration, the controller 212 may selectively pressurize the desired tank 202a, 202b to promote flow of commodity through the corresponding meter 204a, 204b as discussed in more detail herein.

In one example, the first blower 250 may have a first tank passage 254 fluidly coupling the output of the first blower 250 to a first diverter valve 256. In this configuration, the air flow and pressure provided to the passage 208 is also provided to the first tank passage 254 and delivered to the first diverter valve 256. The first diverter valve 256 may be selectively controlled by the controller 212 to divert air from the first tank passage 254 to one or both of the first and second tank 202a, 202b. In this configuration, the controller 212 can selectively provide air from the first blower 250 to the corresponding tank 202a, 202b that is providing commodity to the passage 208. Among other things, this ensures commodity in the corresponding tank is directed towards the passage 208.

Similarly, the second blower 252 may also have a second tank passage 258 fluidly coupling the output of the second blower 252 to a second diverter valve 260. In this configuration, the air flow and pressure provided to the passage 206 is also provided to the second tank passage 258 and delivered to the second diverter valve 260. The second diverter valve 260 may be selectively controlled by the controller 212 to divert air from the second tank passage 258 to one or both of the first and second tank 202a, 202b. In this configuration, the controller 212 can selectively provide air from the second blower 252 to the corresponding tank 202a, 202b that is providing commodity to the passage 206. Among other things, this ensures commodity in the corresponding tank 202a, 202b is directed towards the passage 206.

In another aspect of this disclosure, the first tank passage 254 may have a first pressure control valve 262 fluidly coupled thereto. The first pressure control valve 262 may be selectively controlled by the controller 212 to select the pressure provided to the first diverter valve 256 and ultimately provided to the fluidly coupled tank or tanks 202a, 202b. In this configuration, the controller 212 can selectively control the first diverter valve 256 to provide fluid flow and pressure to the desired tank 202a, 202b and control the fluid pressure provided thereto via the first pressure control valve 262.

Similarly, the second tank passage 256 may have a second pressure control valve 264 fluidly coupled thereto. The second pressure control valve 264 may be selectively controlled by the controller 212 to select the pressure provided to the second diverter valve 260 and ultimately provided to the fluidly coupled tank or tanks 202a, 202b. In this configuration, the controller 212 can selectively control the second diverter valve 260 to provide fluid flow and pressure to the desired tank 202a, 202b and control the fluid pressure provided thereto via the second pressure control valve 264.

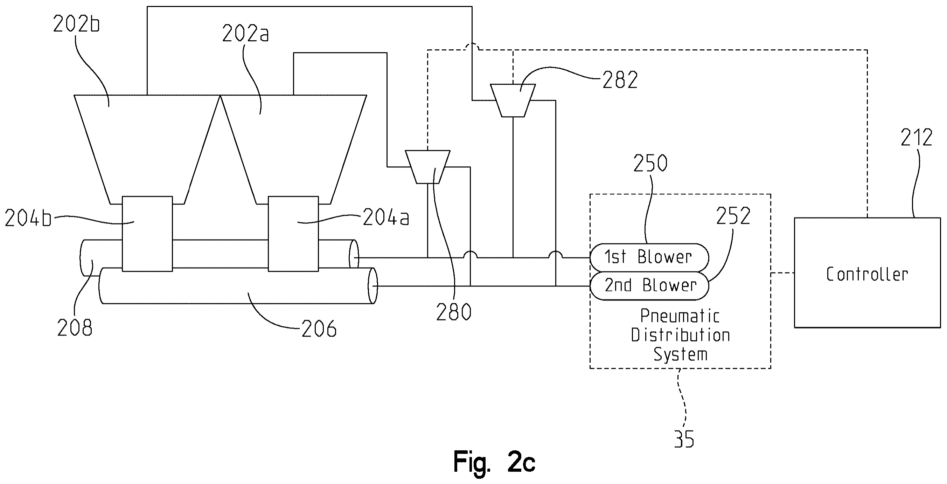

Referring now to Fig. 2c, another embodiment of the meter assembly 200 is illustrated. This embodiment may utilize the controller 212, first and second blowers 250, 252, first and second passages 206, 208, first and second tanks 202a, 202b, and first and second meter assemblies 204a, 204b discussed herein. However, in the embodiment of Fig. 2c, a first combination valve 280 may be fluidly coupled to both the first and second passages 206, 208 and to the first tank 202a. The first combination valve 280 may selectively combine pressure inputs from both the first and second passages 206, 208 to output a regulated pressure to the first tank 202a. Similarly, a second combination valve 282 may be fluidly coupled to both the first and second passages 206, 208 and to the second tank 202b. The second combination valve 282 may selectively combine pressure inputs from both the first and second passages 206, 208 to output a regulated pressure to the second tank 202b.

In the embodiment of Fig. 2c, the controller 212 may utilize the first and second combination valves 280, 282 to selectively provide fluid flow and pressure to the corresponding tank 202a, 202b by combining fluid pressure and flow provided by both of the first and second passages 206, 208 to selectively provide a single pressure regulated output to the corresponding tank 202a, 202b. The controller 212 may select a desired pressure output of the first and second combination valve 280, 282 to provide the desired pressure in the corresponding tank 202a, 202b based on the operating conditions of the meter assembly 200. Further, if commodity is not being processed by either of the tanks 202a, 202b, the controller 212 may shut the output from the corresponding first or second combination valve 280, 282 to ensure fluid resources are only allocated to the tanks and passages in use, among other things.

As will be appreciated herein, the meter assembly of Fig. 2c allows the controller 212 to selectively provide only the needed fluid pressure/flow to the corresponding tank 202a, 202b. This allows the meter assembly to efficiently allocate the fluid resources provided by the blowers 250, 252 to fluid pathways that require fluid flow/pressure. Further, the first and second combination valves 280, 282 may also provide only the required flow/pressure to the tanks 202a, 202b in use. Further still, the controller 212 may selectively alter the output of the corresponding blowers 250, 252 to ensure the blowers 250, 252 are only providing the needed flow/pressure, and no more. This improves efficiency of the meter assembly 200, among other things.

The first and second combination valves 280, 282 may be automatically controlled by the controller 212 or configured to provide outputs selected by a user via the user interface 228. Further still, while two tanks 202a, 202b and corresponding first and second combination valves 280, 282 are illustrated, the present disclosure contemplates implementing the teachings discussed herein on meter assemblies having more than two tanks, and less than two tanks. A person skilled in the art understands how the teachings of this disclosure can be applied to meter assemblies having any number of tanks and combination valves.

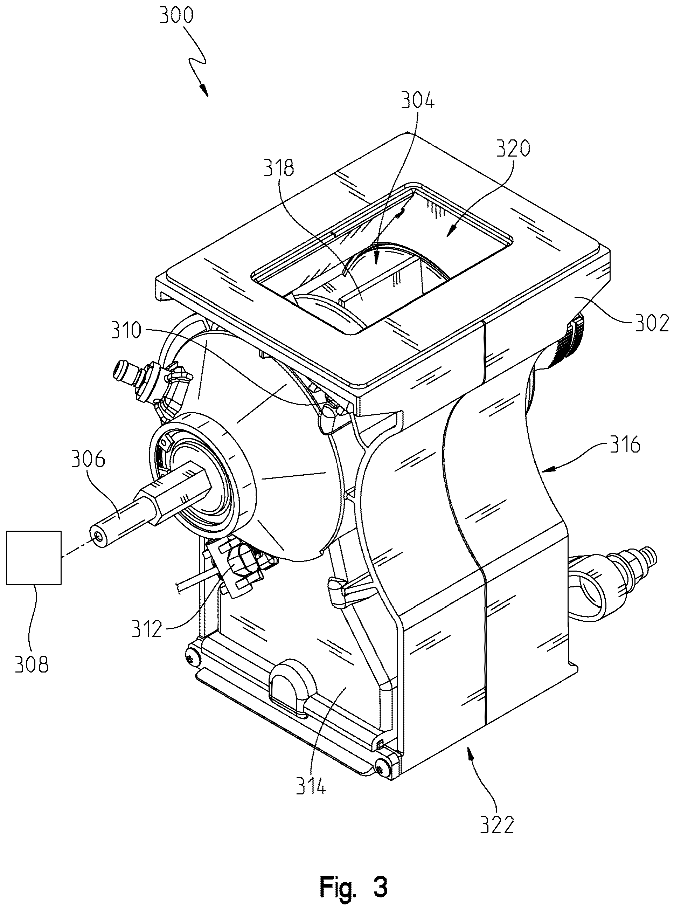

As mentioned herein, the diverter valves 256, 260, pressure control valves 262, 264, and combination valves 280, 282 may be electronically controlled by the controller 212 to alter the state of the valve to the desired setting. The controller 212 may utilize electrical, hydraulic, or pneumatic power to change the state of the corresponding valve utilizing techniques known in the art, such as linear actuators or rotary motors, among other things. Further, the valves 256, 260, 262, 264, 280, 282 may be sized to accommodate the pressures and flow rates expected in a typical agricultural application for an air seeder or other similar machine. The controller may communicate with the valves 256, 260, 262, 264, 280, 282 and pneumatic system 35 to execute the commands discussed herein using wired or wireless protocols known in the art. Referring now to Fig. 3, one embodiment of a meter assembly 300 is illustrated separated from the tank 202, passages 206, 208, and other portions of the seeder 20. The meter assembly 300 may have an inlet 220, an outlet 222, and a roller 218 positioned there between as discussed herein. The cavities 304 of the roller 218 discussed herein may be more apparent with reference to Fig. 3. The meter assembly 300 may generally be formed of a meter housing 302. The meter housing 302 may be a molded material, such as plastic, and formed from two separate sections coupled to one another. The meter housing 302 may provide a passageway for commodity between the inlet 220 and the outlet 222 that is metered by the rotation of the roller 218.

The roller 218 may have a roller shaft 306 that extends through an orifice of the meter housing 302 and is coupled to a roller motor 308. The roller motor 308 may be an electrical, hydraulic, or pneumatic motor that selectively rotates the roller 218. As discussed herein, the rotation speed and direction of the roller 218 may be determined by the speed and direction with which the roller motor 308 rotates. Further, the controller 212 may selectively control the speed and direction of the roller motor 308.

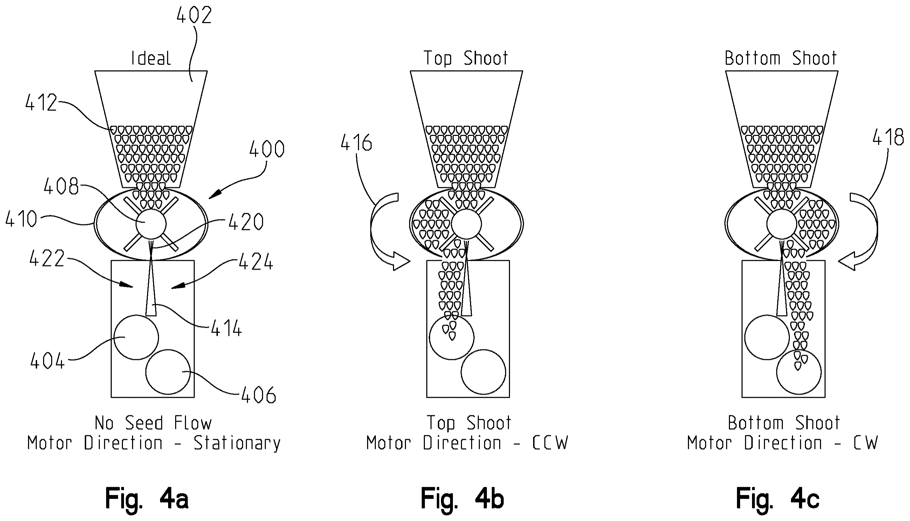

Referring now to Figs. 4a-4c, one embodiment of the present disclosure is illustrated. More specifically, Figs. 4a-4c illustrate a meter assembly 400 positioned between a tank 402 and a first passage 404 and a second passage 406. The meter assembly 400 may have a roller 408 rotationally coupled to a meter housing 410 so the roller 408 can selectively rotate relative to the meter housing 410. The meter housing 410 defines a path directing commodity 412 in the tank 402 to the roller 408 such that commodity from the tank 402 is selectively distributed to one or more of the passages 404, 406 when the roller 408 rotates. Other than the aspects of the meter assembly 400 specifically discussed herein with reference to Figs. 4a-4c, the meter assembly 400 may function substantially similar to the meters 204, 204a, and 204b discussed herein. Similarly, the passages 404, 406 may be substantially the same as the passages 206, 208 discussed herein.

The meter assembly 400 may have a diverter 414 that may be positioned at an outlet of the meter assembly 400. In the embodiment of Figs. 4a-4c, the diverter 414 may be substantially fixed relative to the meter housing 410. That is to say, the diverter 414 may not pivot or otherwise move substantially relative to the meter housing 410. Rather, the diverter 414 may be positioned such that when the roller rotates in a first direction 416, commodity passing through the roller 408 is directed towards the first passage 404. Alternatively, when the roller rotates in a second direction 418, commodity passing through the roller 408 is directed towards the second passage 406.

The diverter 414 may be positioned such that when the roller rotates in the first direction 416, the commodity 412 passing there through is directed towards a first side 422 of the diverter 414. The first side 422 of the diverter 414 may contact at least some of the commodity 412 to direct the commodity 412 to the first passage 404 when the roller 408 rotates in the first direction 416.

Similarly, the diverter 414 may be positioned such that when the roller rotates in the second direction 418, the commodity 412 passing there through is directed towards a second side 424 of the diverter 414. The second side 424 of the diverter 414 may contact at least some of the commodity 412 to direct the commodity 412 to the second passage 406 when the roller 408 rotates in the second direction 418.

In one aspect of this disclosure, the diverter 414 may also have a brush 420 feature at a distal end of the diverter 414. The brush 420 may be positioned such that at least part of the brush 420 extends to, and may contact, the roller 408 when the roller 408 is rotating in either the first direction 416 or the second direction 418. The brush 420 may be formed of a material that allows the brush 420 to deform when contacted by the roller 408 but have sufficient stiffness to prevent commodity 412 from passing thereby. In other words, the brush 420 may substantially prevent commodity 412 from passing thereby and into the second passage 406 when the roller 408 is rotating in the first direction 416. Similarly, the brush 420 may substantially prevent commodity 412 from passing thereby and into the first passage 402 when the roller 408 is rotating in the second direction 418.

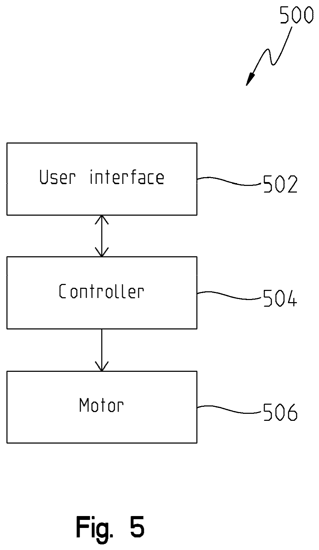

Referring now to Fig. 5, a schematic representation of a meter assembly control system 500 is illustrated. The control system 500 comprises a user interface 502 that selectively communicates with a controller 504. The controller 504 may be a hardware component that has a processor for executing commands and analyzing inputs and memory unit for storing and transferring data. The controller 504 may be part of any control system on the tractor 22 or seeder 20 or may be a dedicated hardware component. Further, in one contemplated embodiment the controller 504 may be located remotely from the meter assembly and provide instructions and read data wirelessly. Further still, the controller 504 may be substantially the same as controller 212 discussed herein. Similarly, the user interface 502 may be substantially the same as user interface 228.

Similarly, the user interface 502 may be a device that provides visual, audible, haptic, or other feedback to a user and allows a user to transmit instructions to the controller 504. For example, the user interface 502 may be a touchscreen in the cab of the tractor 22 wherein the user can select icons or other inputs to provide instructions to the controller 504. Similarly, the controller 504 may provide feedback to the user interface 502 that can be displayed or otherwise communicated to the user. In one aspect of this disclosure, the user interface may be a remote device such as a tablet or smartphone wherein the controller 504 communicates wirelessly with the remote device 502 using known wireless protocols. Further still, the user interface 502 may be a dedicated hardware device on the seeder 20.

Regardless, the controller 504 may selectively control a motor 506 to rotate a corresponding roller of a meter assembly such as meters 204, 204a, 204b or meter assembly 400. The motor 506 may be an integrated smart motor that can selectively control the speed and direction of a corresponding roller. In one aspect of this disclosure, a user may engage the user interface 502 to select a desired passage to distribute commodity to. The controller 504 may then rotate the motor 506 in the corresponding direction to distribute the commodity to the appropriate passage as will be described in more detail herein. In one aspect of this disclosure, the motor 506 may be substantially the same as motor 308 discussed herein.

In the embodiment of Figs. 4a-4c, the controller 504 may selectively rotate the roller 408 based on the user input from the user interface 502 to selectively distribute commodity 412 to the desired passage 404, 406. The desired passage may be identified by the controller 504 either as a direct selection from the user interface 502 or the controller 504 may identify the desired passage to select based on other operating condition of the seeder 20. Regardless, if the controller 504 identifies that commodity is to be distributed to the first passage 404, the controller 504 may engage the motor 506 to rotate the roller 408 in the first direction 416. Alternatively, if the controller 504 identifies that commodity 412 is to be distributed to the second passage 406, the controller 504 may engage the motor 506 to rotate the roller 408 in the second direction 418.

Accordingly, the embodiment of Figs. 4a-4c provides for a meter assembly that directs commodity 412 to either the first passage 404 or the second passage 406 based primarily on the rotation direction of the roller 408. That is to say, the diverter 414 does not need to be substantially reoriented to direct commodity 412 from the tank 402 to the desired passage (i.e., the first passage 404 or the second passage 406).

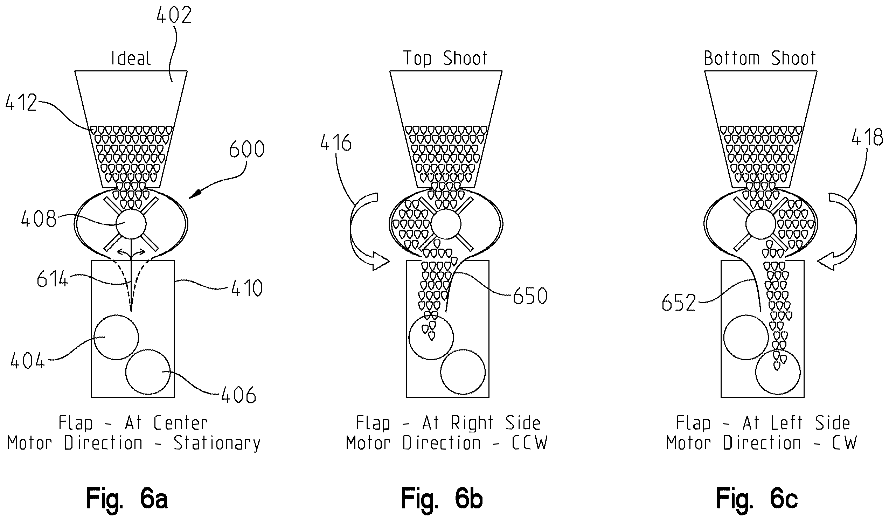

Referring now to Figs. 6a-6c, another embodiment of a meter assembly 600 is illustrated. The meter assembly 600 may be substantially similar to the other meters 204, 204a, 204b and meter assembly 400 except it may have a flexing diverter 614 as described herein. Otherwise, the meter assembly 600 may be coupled to a tank 402 having commodity 412 therein. The commodity 412 can be selectively passed through the meter assembly 600 with the roller 408 as discussed herein. The meter assembly 600 differs from the meter assembly 400 in that the flexing diverter 614 is configured to flex or otherwise be deformed as the roller 408 rotates. The flexing diverter 614 is configured to selectively direct commodity 412 exiting the roller 408 to one of the first passage 404 or the second passage 406.

More specifically, when the roller 408 rotates in the first direction 416, the flexing diverter 614 contacts the roller 408 and is deformed through the contact to become positioned in the first orientation 650. In the first orientation 650, the flexing diverter 614 is positioned to substantially block commodity 412 from entering the second passage 406 and directing commodity 412 to the first passage 404. Alternatively, when the roller 408 rotates in the second direction 418, the flexing diverter 614 contacts the roller 408 and is deformed through the contact to become positioned in the second orientation 652. In the second orientation 652, the flexing diverter 614 is positioned to substantially block commodity 412 from entering the first passage 404 and to direct commodity 412 to the second passage 406.

In the embodiment of Figs. 6a-6c, the flexing diverter 614 may automatically transition to the first orientation 650 or the second orientation 652 based on the rotation direction of the roller 408. For example, the flexing diverter 614 may be formed of a deformable material such as rubber or the like. The flexing diverter 614 may be sized such that it is coupled to the meter housing 410 on one end, but extends towards, and at least partially contacts the roller 408 on an opposing end. In this configuration, when the roller 408 rotates in the first direction 416 part of the flexing diverter 614 contacts the roller 408 and the rotation direction of the roller causes the flexing diverter 614 to become orientated in the first orientation 650 due, in part, to the contact with the roller 408. Similarly, when the roller 408 rotates in the second direction 418 part of the flexing diverter 614 contacts the roller 408 and the rotation direction of the roller causes the flexing diverter 614 to become orientated in the second orientation 652 due, in part, to the contact with the roller 408.

The flexing diverter 614 may be formed of any material capable of flexing and becoming oriented as discussed herein. While the present disclosure discusses forming the flexing diverter out of rubber, this disclosure also contemplates forming the flexing diverter 614 of other materials known by those having skill in the relevant art as being able to achieve the desired bending discussed herein.

The meter assembly controller system 500 may substantially control the meter assembly 600 similarly as discussed herein for the meter assembly 400. More specifically, the controller 504 may selectively drive the motor 506 in a desired direction to alter the orientation of the flexing diverter 614 to distribute commodity in the desired passage. Similar to the embodiment of Figs. 4a-4c, the meter assembly 600 of Figs. 6a-6c may selectively distribute commodity in the desired passage solely by altering the rotation direction of the roller 408.

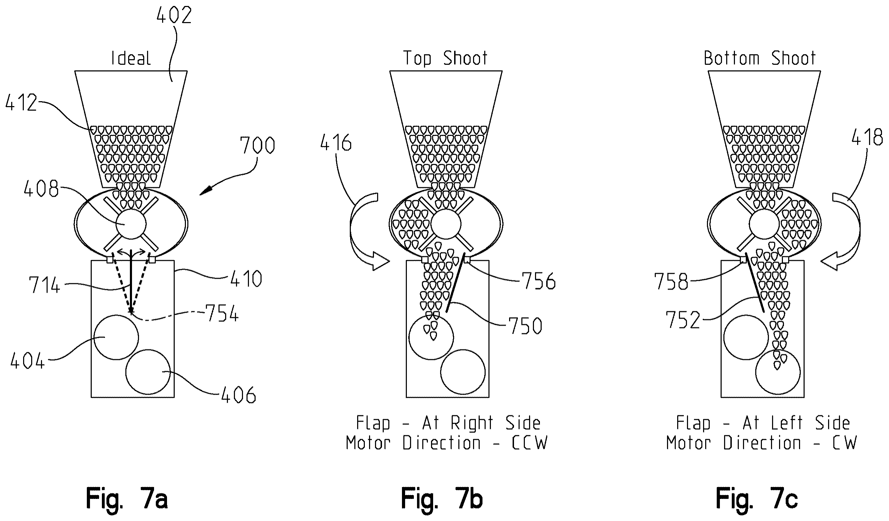

Referring now to Figs. 7a-7c, another embodiment of a meter assembly 700 is illustrated. The meter assembly 700 may be substantially similar to the other meters 204, 204a, 204b and meter assemblies 400 and 600 except it may have a pivoting diverter 714 instead of the diverter 414 described for Figs. 4a-4c or the flexing diverter 614 described for Figs. 6a-6c. Otherwise, the meter assembly 700 may be coupled to a tank 402 having commodity 412 therein. The commodity 412 can be selectively passed through the meter assembly 700 with the roller 408 as discussed herein. The meter assembly 700 differs from the meter assembly 400 and 600 in that the pivoting diverter 714 is configured to selectively pivot between a first orientation 750 and a second orientation 752 as the roller 408 rotates. The pivoting diverter 714 is configured to selectively direct commodity 412 exiting the roller 408 to one of the first passage 404 or the second passage 406 based primarily on the rotation direction of the roller 408.

More specifically, when the roller 408 rotates in the first direction 416, the pivoting diverter 714 contacts the roller 408 and pivots due to the contact with the roller 408 to become positioned in the first orientation 750. In the first orientation 750, the pivoting diverter 714 is positioned to substantially block commodity 412 from entering the second passage 406 and directs commodity 412 to the first passage 404. Alternatively, when the roller 408 rotates in the second direction 418, the pivoting diverter 714 contacts the roller 408 and pivots through the contact to become positioned in the second orientation 752. In the second orientation 752, the pivoting diverter 714 is positioned to substantially block commodity 412 from entering the first passage 404 and to direct commodity 412 to the second passage 406.

In the embodiment of Figs. 7a-7c, the pivoting diverter 714 may automatically transition to the first orientation 750 or the second orientation 752 based on the rotation direction of the roller 408. For example, the pivoting diverter 714 may be pivotally coupled to the meter housing 410 at a base end such that the pivoting diverter 714 can pivot about an axis 754 relative to the meter housing 710. In this example, the pivoting diverter 714 may be at least semi-rigid such that contact with the roller 408 causes the pivoting diverter 714 to pivot about the axis 754 towards either the first orientation 750 or the second orientation 752.

The pivoting diverter 714 may be sized such that it is coupled to the meter housing 410 on one end to pivot about the axis 754, but extends towards, and at least partially contacts the roller 408 on an opposing end. In this configuration, when the roller 408 rotates in the first direction 416 part of the pivoting diverter 714 contacts the roller 408 and the rotation direction of the roller 408 causes the pivoting diverter 614 to pivot about the axis 754 to become orientated in the first orientation 750 due, in part, to the contact with the roller 408. Similarly, when the roller 408 rotates in the second direction 418 part of the pivoting diverter 714 contacts the roller 408 and the rotation direction of the roller causes the pivoting diverter 714 to become orientated in the second orientation 752 due, in part, to the contact with the roller 408.

In another aspect of this disclosure, the meter assembly 700 may have a first magnet 756 positioned to magnetically engage the pivoting diverter 714 in the first orientation 750 and a second magnet 758 positioned to magnetically engage the pivoting diverter 714 in the second orientation 752. The magnets 756, 758 may be rare earth magnets or electromagnets. In one aspect of this disclosure, the magnets 756, 758 may be electromagnets that selectively attract a portion of the pivoting diverter 714.

In the example wherein the magnets 756 758 are electromagnets, the controller 504 may selectively magnetize the magnet 756, 758 that corresponds with the desired orientation of the pivoting diverter 714. For example, if the desired passage of the commodity is the first passage 404, the controller 504 may rotate the roller 408 in the first direction 416 and demagnetize the second magnet 758 and magnetize the first magnet 756. The roller 408 may at least partially contact a portion of the pivoting diverter 714 to transition the pivoting diverter 714 to the first orientation 750. In the first orientation 750, the magnetized first magnet 756 may engage the pivoting diverter 714 to maintain the pivoting diverter in the first orientation 750.

Alternatively, if the desired passage of the commodity is the second passage 406, the controller 504 may rotate the roller 408 in the second direction 418 and demagnetize the first magnet 756 and magnetize the second magnet 758. The roller 408 may at least partially contact a portion of the pivoting diverter 714 to transition the pivoting diverter 714 to the second orientation 752. In the second orientation 752, the magnetized second magnet 756 may engage the pivoting diverter 714 to maintain the pivoting diverter in the second orientation 752.

In one aspect of this disclosure of a meter assembly 700, the pivoting diverter 714 may be formed of a magnetic material. Alternatively, the pivoting diverter 714 may have a magnetic material coupled to a distal portion thereof that will become positioned adjacent to the corresponding magnet 756, 758 when the pivoting diverter 714 is in the corresponding first or second orientation 750, 752.

The meter assembly controller system 500 discussed herein may substantially control the meter assembly 700 as discussed herein for the meter assembly 400 and 600. More specifically, the controller 504 may selectively drive the motor 506 in a desired direction to alter the orientation of the pivoting diverter 714 to distribute commodity in the desired passage. Like the embodiment of Figs. 4a-4c, the meter assembly 700 of Figs. 7a-7c may selectively distribute commodity in the desired passage by altering the rotation direction of the roller 408.

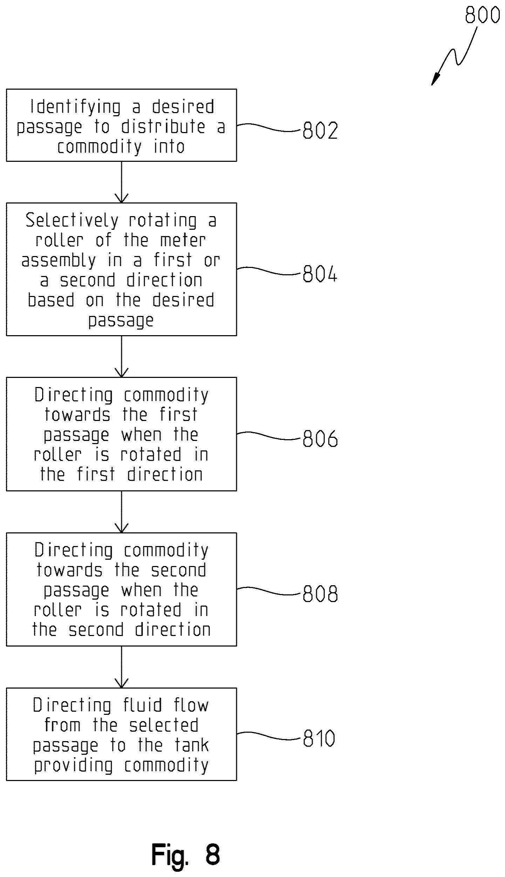

Referring now to Fig. 8, one example of a method for controlling the distribution of commodity 800 utilizing the meter assemblies 400, 600, 700 discussed herein is illustrated. The method 800 may be implemented by the controller 504 or other hardware component capable of executing commands and reading data as discussed herein. In one aspect of this disclosure, the method 800 may be stored in the memory unit as an algorithm, computer program, or other executable method for the controller 504 to implement.

The method 800 may begin by identifying a desired passage to distribute commodity 412 from the tank 402 into in box 802. This step may be implemented based on the desired routing of the commodity 412 from tank 402 to the ground as identified by a user through the user interface 502 or other user input. For example, if the tank 402 comprises a fertilizer that the user would like introduced to the first passage 404, the user may select that specific desired passage with the user interface 502. Then, the controller 504 may rotate the motor 506 in the first direction 416 to ensure the commodity 412 in the tank 402 is properly directed to the desired passage, which in this example is the first passage 404.

Similarly, if the tank 402 comprises a seed that the user would like introduced to the second passage 406, the user may select that specific desired passage with the user interface 502. Then, the controller 504 may rotate the motor 506 in the second direction 418 to ensure the commodity 412 in the tank 402 is properly directed to the desired passage, in this example the second passage 406.

While the desired passage has been described herein as a user input, other embodiments considered herein may select the desired passage automatically with the controller 504 based on other inputs identified therein.

After the desired passage is identified in box 802, the controller 504 may selectively rotate the roller 408 in the corresponding rotation direction 416, 418 by engaging the motor 506 to rotate the roller 408 in box 804. As discussed herein, the meter assemblies 400, 600, 700 may automatically direct commodity to the appropriate passage 404, 406 based on the rotation direction of the roller 408. As such, the controller 504 can direct the commodity to the desired passage by selectively rotating the roller 408 in the corresponding direction with the motor 506. More specifically, the controller 504 may direct commodity 412 towards the first passage 404 when the roller 408 is rotated in the first direction 416 with the motor 506 in box 806. For the meter assembly 400, when the motor 506 rotates the roller 408 in the first direction 416, the diverter 414 and brush 420 may contact the commodity passing there through to direct the commodity 412 to the first passage 404. For the meter assembly 600, when the motor 506 rotates the roller 408 in the first direction 416, the flexing diverter 614 may contact the roller 408 and flex to the first orientation 650 to direct the commodity 412 passing there through to the first passage 404. For the meter assembly 700, when the motor 506 rotates the roller 408 in the first direction 416, the pivoting diverter 714 may contact the roller 408 and pivot to the first orientation 750 to direct the commodity 412 passing there through to the first passage 404.

Similarly, the controller 504 may direct commodity 412 towards the second passage 406 when the roller 408 is rotated in the second direction 418 with the motor 506 in box 808. For the meter assembly 400, when the motor 506 rotates the roller 408 in the second direction 418, the diverter 414 and brush 420 may contact the commodity 412 passing there through to direct the commodity 412 to the second passage 406. For the meter assembly 600, when the motor 506 rotates the roller 408 in the second direction 418, the flexing diverter 614 may contact the roller 408 and flex to the second orientation 652 to direct the commodity 412 passing there through to the second passage 406. For the meter assembly 700, when the motor 506 rotates the roller 408 in the second direction 418, the pivoting diverter 714 may contact the roller 408 and pivot to the second orientation 752 to direct the commodity 412 passing there through to the second passage 406.

In one aspect of this disclosure, the controller 504 may also control the fluid flow path from the pneumatic distribution system 35 to correspond with the selected passage for a particular tank in box 810. More specifically, the controller 504 may selectively divert air from the first or second blower 250, 252 to the desired tank by selectively positioning the corresponding diverter valve 262, 264 to produce pressure to the desired tank from the passage 206, 208 being provided commodity from the corresponding tank. For example, if the controller 504 is directing commodity to the passage 206, the diverter valve 260 directing flow from the second blower 252 for the corresponding passage 206 may direct fluid flow from the second blower 252 to the corresponding tank as discussed herein. Alternatively, if the controller 504 is directing commodity to passage 208, the diverter valve 256 directing flow from the first blower 250 for the corresponding passage 208 may direct fluid flow from conduit for passage 208 to the corresponding tank. In one aspect of this disclosure, if a tank is not in use, the controller 504 can turn off the fluid flow through the conduit for that tank via the corresponding diverter valve 256, 260 so that tank will not pressurize.

The present disclosure provides a system capable of automating a commodity passage selection process electronically without requiring substantial user manipulation. More specifically, a user may simply select which tanks are to provide commodity to the available passages via the user interface 228 and the controller 212 may selectively control the roller 408 rotation direction to direct commodity to the desired passage while also modifying the corresponding diverter valve 256, 260 to ensure that the blower 250, 252 providing fluid flow to the selected passage 206, 208 is also the blower 250, 252 providing fluid flow to the tank 202a, 202b providing commodity to the selected passage 206, 208. Further, the controller 212 may also selectively alter the pressure control valves 262, 264 to provide the desire pressure to the corresponding tank. The controller 212 may alter the pressure control valves 262, 264 to provide a pressure to the tank that is sufficient to promote commodity flow through the corresponding meter 204a, 204b but not substantially greater than the needed pressure.

As noted herein, the fluid flowing to the tank 202a, 202b may be provided by the same blower 250, 252 directed towards the selected passage 206, 208. Accordingly, the controller 212 may utilize the pressure control valves 262, 264 to ensure the fluid flow generated by the blowers 250, 252 are moving commodity through the corresponding passages as efficiently as possible. That is to say, the corresponding blower 250, 252 is not providing unnecessarily high pressures to the corresponding tank 202a, 202b and the available fluid flow is primarily directed towards the corresponding passage 206, 208. Further, the controller 212 may selectively operate the corresponding blowers 250, 252 at reduced speeds when the pressure control valves 262, 264 are providing adequate fluid flow and pressure to the corresponding tank 202a, 202b.

## Claims

1. A method for controlling the distribution of commodity in a planting assembly (20), comprising:
(802) identifying, with a controller (212, 504), a desired passage from at least a first passage (206, 404) and a second passage (208, 406) for a meter assembly (200, 400) to distribute a commodity into; and
(804) selectively rotating a roller (218, 408) of the meter assembly (200, 400), with the controller (212, 504), in a first direction (416) to distribute commodity into the first passage (206, 404) and selectively rotating the roller (218, 408) of the meter assembly (200, 400), with the controller (212, 504), in a second direction (418) to distribute commodity into the second passage (208, 406);
wherein (806) the commodity is directed towards the first passage (206, 404) when the roller (218, 408) is rotated in the first direction (416) and (808) commodity is directed towards the second passage (208, 406) when the roller (218, 408) is rotated in the second direction (418).

2. The method of claim 1, further comprising diverting the commodity towards the desired passage with a diverter (414, 614, 714) that is fixed relative to a meter assembly housing (410) and positioned at an outlet of the meter assembly (408).

3. The method of claim 2, wherein the diverter (414) comprises at least one brush (420) extending from a tip of the diverter (414) towards the roller (408).

4. The method of claim 2, further comprising diverting the commodity towards the desired passage with a diverter (614) that flexes relative to a meter assembly housing (410) when the roller (408) transitions from rotating in the first direction (416) to rotating in the second direction (418).

5. The method of claim 4, further comprising flexing the diverter (614) to a first orientation when the roller (408) rotates in the first direction (416) to direct commodity from the outlet to the first passage (404) and flexing the diverter (614) to a second orientation (418) when the roller (408) rotates in the second direction to direct commodity from the outlet to the second passage (406).

6. The method of claim 1, further comprising diverting the commodity towards the desired passage with a diverter (714) that pivots relative to a meter assembly housing (410) between a first orientation (750) and a second orientation (752) by contacting the roller (408) when the roller (408) transitions from rotating in the first direction (416) to rotating in the second direction (418).

7. The method of claim 6, further comprising transitioning the diverter (714) to the first orientation (750) with the roller (408) when the roller (408) is rotating in the first direction (416) to direct commodity from the outlet to the first passage (404) and maintaining the diverter (714) in the first orientation (750) with a first magnet (756) in the meter assembly housing (410).

8. The method of claim 6 or 7, further comprising transitioning the diverter (714) to the second orientation (752) with the roller (408) when the roller (408) is rotating in the second direction (418) to direct commodity from the outlet to the second passage (406) and maintaining the diverter (714) in the second orientation (752) with a second magnet (758) in the meter assembly housing (410).

9. The method of one of the claims 1 to 8, further comprising selectively redirecting fluid flow, with the controller (212), from a first blower (250) to a first tank (202a) configure to contain commodity when the roller (218) is rotated in the first direction (416) and selectively redirecting fluid flow, with the controller (212), from a second blower (252) to the first tank (202a) when the roller (218) is rotated in the second direction (418).

10. The method of claim 9, further comprising selectively controlling a diverter valve (262, 264), with the controller (212, 504), to divert fluid from the first blower (250) to the first tank (202a).

11. The method of claim 10, wherein the diverter valve (262, 264) is fluidly coupleable to a second tank (202b).

12. The method of one of the claims 9 to 11, further comprising selectively controlling a pressure provided to the first tank (202a) with the controller (212, 504) through a pressure control valve (262, 264).

13. The method of one of the claims 1 to 12, further comprising selectively redirecting a fluid connection between a blower (250, 252) and a tank (202a, 202b), with the controller (212, 504), when the controller (212, 504) switches from rotating the roller (218, 408) in the first direction (416) to rotating the roller (218, 408) in a second direction (418).

14. The method of one of the claims 2 to 13, wherein the roller (218, 408) is configured to selectively distribute commodity from a tank (202a, 202b) to one or more of the first passage (206, 404) and the second passage (208, 406) and wherein the diverter (414, 614, 714) directs commodity flow from the tank (202a, 202b) to the first passage (206, 404) when the roller (218, 408) rotates in a first direction (416) and the diverter (414, 614, 714) directs commodity flow from the tank (202a, 202b) to the second passage (208, 406) when the roller rotates (218, 408) in a second direction (418).
